# EUROPEAN PATENT APPLICATION

(11) **EP 2 712 205 A2**
(43) Date of publication of application: **26.03.2014**
(21) Application number: 13185983.7
(22) Date of filing: 25.09.2013
(51) Int. Cl.: H04N 21/4223, H04N 21/414, H04N 21/845, H04N 5/232, H04N 5/76, G11B 27/034

(54) **Method and apparatus for image data processing, and electronic device including the apparatus**

(30) Priority: 25.09.2012 KR 20120106784
(71) Applicant: Samsung Electronics Co., Ltd, Gyeonggi-do 443-742 (KR)
(72) Inventor: Han, Jongheum, 443-742 Gyeonggi-do (KR); Kim, Myoungwon, 443-742 Gyeonggi-do (KR); Kim, Moonsoo, 443-742 Gyeonggi-do (KR); Chae, Yongsu, 443-742 Gyeonggi-do (KR); Kim, Jaedong, 443-742 Gyeonggi-do (KR); Jang, Hyosik, 443-742 Gyeonggi-do (KR)
(74) Representative: Nederlandsch Octrooibureau

(57) **Abstract**

A camera control technique is provided. An image data processing apparatus includes a raw data processor configured to convert a signal collected by an image sensor into a digital signal, an identification information processor configured to allocate identification information to each video frame obtained by the raw data processor, and a metadata processor configured to write the identification information in metadata of the video frame. Video frames can be captured with different frame rates. The identifcation information includes at least one of a time stamp and a frame counter. Based on this identification information missig video frames or video frames being reversed in order can be detected. Afterwards, the order of video frames can be corrected or a missing video frame can be re-inserted by copying eiher the preceding or the subseqent video frame.

## Description

### TECHNICAL FIELD

The present disclosure relates to processing of image data collected by a camera of an electronic device. More particularly, the present disclosure relates to a method and apparatus for processing image data such as processing errors in video data, and to an electronic device including the apparatus.

### BACKGROUND

Based on the remarkable growth of communication and related technologies, mobile electronic devices (e.g., smart phones, tablet Personal Computers (PCs), etc.) are becoming increasingly popular due to their high usability and their portability. Moreover, mobile electronic devices produced today have outgrown their respective traditional fields (e.g., simple communication) and have reached a mobile convergence stage in which a single mobile device has the ability to support various user functions.

Most of such mobile devices have a camera module to offer a camera function. When manipulating a built-in camera module, the user of a mobile device can obtain images of a subject, save the obtained images in his or her mobile device, and send them to other electronic devices. Normally, in the mobile device having a camera module, an image sensor collects images, and an image data processing apparatus receives image signals from the image sensor, processes the received signals, and then transmits them to a control unit.

During the image processing described above, an unexpected error may occur. However, a mobile device of the related art having the above-mentioned camera module ignores the occurrence of errors, so that collected images may be deteriorated in quality. Nevertheless, no adequate solution for treating or curing such errors has been proposed in the art. Accordingly, there is a need for an improved apparatus and method for adaptively processing of image data collected by a camera of an electronic device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an apparatus and method for processing of image data collected by a camera of an electronic device.

Another aspect of the present disclosure is to provide an image data processing method and apparatus that can adaptively process errors in video data through writing of index information.

Yet another aspect of the present disclosure is to provide an electronic device that includes the above apparatus and performs the above method.

According to an aspect of the present disclosure, an image data processing apparatus is provided. The apparatus includes a raw data processor configured to convert a signal collected by an image sensor into a digital signal, an identification information processor configured to allocate identification information to each video frame obtained by the raw data processor, and a metadata processor configured to write the identification information in metadata of the video frame.

According to another aspect of the present disclosure, an electronic device supporting an image data processing is provided. The device includes an image data processing apparatus configured to allocate identification information to an image frame of each video frame obtained and to write the identification information in metadata of the video frame, and a control unit configured to receive the video frame and the metadata from the image data processing apparatus and to perform an encoding of the video frame by using the identification information allocated to each image frame.

According to yet another aspect of the present disclosure, an image data processing method is provided. The method includes obtaining an image frame in response to a request for a video recording, allocating identification information to the obtained image frame, and writing the identification information in metadata of the image frame.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a block diagram illustrating a configuration of an electronic device having an image data processing apparatus in accordance with an embodiment of the present disclosure.

FIG. 2 is a block diagram illustrating a configuration of an image data processing apparatus, such as the image data processing apparatus shown in FIG. 1, in accordance with an embodiment of the present disclosure.

FIG. 3 is a block diagram illustrating a configuration of a control unit, such as the control unit shown in FIG. 1, in accordance with an embodiment of the present disclosure.

FIG. 4 is a flow diagram illustrating a method for operating an image data processing apparatus in accordance with an embodiment of the present disclosure.

FIG. 5 shows an example of allocating a time stamp to an image frame taken by a fixed frame type in accordance with an embodiment of the present disclosure.

FIG. 6 shows an example of allocating a time stamp to an image frame taken by a variable frame type in accordance with an embodiment of the present disclosure.

FIG. 7 shows a flow diagram illustrating a method for operating a control unit in accordance with an embodiment of the present disclosure.

FIG. 8 shows an example of image frame rearrangement based on identification information in accordance with an embodiment of the present disclosure.

FIG. 9 shows an example of writing and transmitting identification information in accordance with an embodiment of the present disclosure.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Furthermore, well known or widely used techniques, elements, structures, and processes may not be described or illustrated in detail to avoid obscuring the essence of the present disclosure. Although the drawings represent embodiments of the disclosure, the drawings are not necessarily to scale and certain features may be exaggerated or omitted in order to better illustrate and explain the present disclosure.

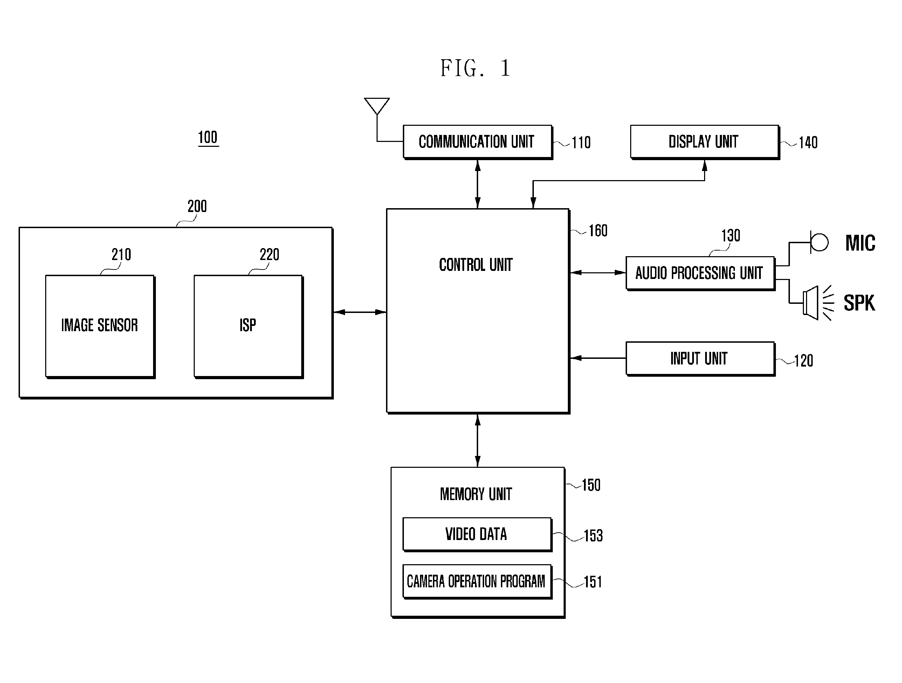

FIG. 1 is a block diagram illustrating a configuration of an electronic device having an image data processing apparatus in accordance with an embodiment of the present disclosure.

Referring to FIG. 1, the device 100 includes a communication unit 110, an input unit 120, an audio processing unit 130, a display unit 140, a memory unit 150 and a control unit 160, and may further include a camera module 200 to support a camera function. In some embodiments, the communication unit 110 may be removed from the device 100 that does not support a communication function. Also, the control unit 160 may include an application processor that may process a camera function.

The camera module 200 may apply at least one of a time stamp and a frame counter when processing video data collected by an image sensor 210 and may transmit the video data to the control unit 160. Here, the frame counter corresponds to the number of each image frame. Therefore, the control unit 160 may find errors in video data by checking at least one of the time stamp and the frame counter and hence take suitable actions when processing the video data to which at least one of the time stamp and the frame counter is applied.

As mentioned above, the communication unit 110 is an optional element that is added when the device 100 supports a communication function. The communication unit 110 may establish a communication channel with a base station in order to support a communication function of the device 100 and, depending on a user's manipulation or schedule information, receive information from external entities or transmit information stored in or collected by the device 100 to external entities. Additionally, the communication unit 110 may be formed of a short-range communication module to establish a short-range communication channel with other devices and to send stored images thereto. More particularly, the communication unit 110 may establish a communication channel for transmitting video data encoded and stored by the control unit 160 among video data collected by the camera module 200 to other devices. Also, the communication unit 110 may receive video data from other devices and store the received video data in the memory unit 150 under the control of the control unit 160. Here, the received video data may be data to which at least one of a time stamp and a frame counter is applied.

The input unit 120 is an element that creates various input signals required for the operation of the device 100. Depending on compatibility of the device 100, the input unit 120 may employ any of various input mechanisms such as a keyboard, a keypad, key buttons, and the like. In some embodiments, if the display unit 140 is provided as a touch screen, the input unit 120 may be formed of a virtual touch map displayed on the touch screen. More particularly, the input unit 120 may create a shutter key input signal for a camera control, a key input signal for a camera setting, and the like. These key input signals may be created from a hardware key disposed at the front or lateral side of the device 100. If the display unit 140 is provided in the form of a touch screen, a touch map for creating each key input signal may be displayed on the display unit 140.

The audio processing unit 130 may include a speaker (SPK) to output audio data created during the operation of the device 100, audio data associated with the playback of audio files stored in the memory unit 150, audio data received from the external entities, or the like. Also, the audio processing unit 130 may support an audio data collecting function. For this, the audio processing unit 130 may include a microphone (MIC). Audio data outputted by the audio processing unit 130 may be various feedback sounds or sound effects associated with a camera control. For example, if any unexpected error occurs in video data to which a frame counter is applied, the audio processing unit 130 may output a predefined feedback sound in response to the occurrence of the error. The output of such feedback sounds may not be provided according to a designer's intention or, even though provided, may be omitted according to a user's setting. Additionally, audio data collected by the microphone may be audio signals obtained in connection with videos. If the device 100 supports a communication function, the microphone may support the collection of voice signals for a communication function.

The display unit 140 is an element that offers various screens required for the operation of the device 100. For example, the display unit 140 may offer an idle screen, a menu screen, and the like. In some embodiments, the display unit 140 may offer various screens such as a camera control screen, a camera operation screen, a camera setting screen, and the like. More particularly, the display unit 140 may output, as a preview screen, data received from the camera module 200 in response to an input signal for activating a video function of the camera module 200. Additionally, when any error occurs at a step of processing video data, the display unit 140 may support the output of a related message. The processing of video data may include storing data received from the camera module 200 in the memory unit 150. Since this can be performed independently from the output of a preview screen, a function to output a related message may be omitted. Meanwhile, if there is an input signal for requesting a playback of any video data in response to a user's selection after the video data is stored in the memory unit 150, the display unit 140 may perform a playback of video data and thereby support the output of recorded videos.

The memory unit 150 may store an operating system required for the operation of the device 100, and also store data, applications, programs, algorithms and the like associated with user functions. More particularly, the memory unit 150 may store a camera operation program 151 for supporting a camera control function, and video data 153.

The camera operation program 151 may store various routines required for a camera operation of the device 100. For example, the camera operation program 151 may include a routine for outputting, as a preview image, data collected and transmitted by the camera module 200 activated in response to a turn-on input, a routine for storing, as the video data 153, data collected and transmitted by the camera module 200 in response to a user's selection, and a routine for storing, as still-images, data collected and transmitted by the camera module 200 in response to a user's selection. Additionally, the routine for storing the video data 153 may include a routine for finding an error by checking at least one of a time stamp and a frame counter in data received from the camera module 200, a routine for processing errors to correct them, a routine for transmitting data with processed-errors or error-free data to an encoder, and the like.

Further, the camera operation program 151 may include a routine for offering a menu for the operation of the camera module 200, and a routine for supporting a specific function in response to a menu selection. The latter routine may have a routine associated with a mode setting function to activate or inactivate an error correction function for data received from the camera module 200 and a routine associated with a function to regulate a shutter speed, ISO, etc. in connection with a camera.

The camera module 200 is a module that collects images as still-images or videos. The camera module 200 may include the image sensor 210 and an image data processing apparatus 220. Further, the camera module 200 may include some elements required for supporting a camera function, e.g., elements for image collection such as a lens, an iris, an iris driver, a lens regulator, etc.

The image sensor 210 is an element in which a plurality of photo sensors are arranged in a matrix form and which collects light transmitted through a lens. Also, the image sensor 210 transmits collected light to a camera memory unit equipped corresponding to the photo sensors. The camera memory unit may digitalize and store optical information formed in the photo sensors, and may have address lines arranged to read information stored at respective locations.

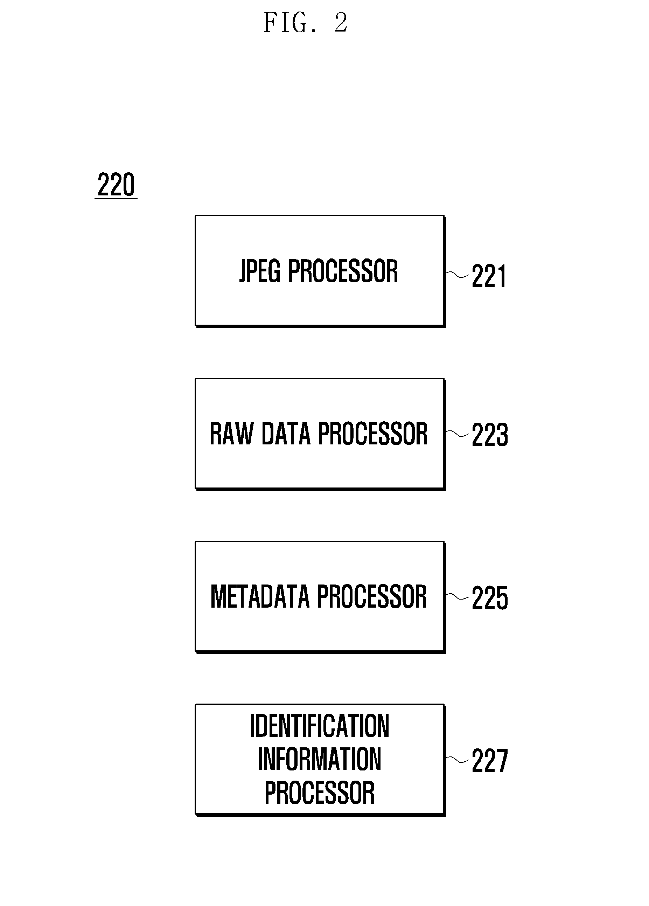

The image data processing apparatus 220 obtains, per line, optical information collected by the image sensor 210 and stored in the camera memory unit, constructs it as a single frame unit, and transmits it to the control unit 160. More particularly, the image data processing apparatus 220 may allocate at least one of a time stamp and a frame counter to the obtained image information collected by the image sensor 210 by at least one frame unit. For example, the image data processing apparatus 220 may process, at first, video data collected by the image sensor 210, write at least one of a time stamp and a frame counter in metadata or embedded data, and transmit it to an encoder together with video data. Meanwhile, if the image data processing apparatus 220 belongs to the control unit 160, the camera module 200 may transmit video data collected by the image sensor 210 to the control unit 160 and allocate at least one of a time stamp and a frame counter to the video data by using a clock of the image sensor 210 or using a periphery or transmission clock available for the camera module 200. The image data processing apparatus 220 belonging to the control unit 160 may perform an image processing of the received video data on the basis of a time stamp provided by the camera module 200 and transmit the image-processed video data to an encoder to perform an encoding process. Here, raw data of the camera module 200 may be transmitted to the control unit 160 without any image processing. The above-discussed image data processing apparatus 220 may include elements shown in FIG. 2.

FIG. 2 is a block diagram illustrating a configuration of an image data processing apparatus, such as the image processing apparatus shown in FIG. 1, in accordance with an embodiment of the present disclosure.

Referring to FIG. 2, the image data processing apparatus 220 may include a JPEG processor 221, a raw data processor 223, a metadata processor 225, and an identification information processor 227.

The JPEG processor 221 is an element that supports a still-image processing of the image data processing apparatus 220. Therefore, if any event for taking a still-image is transmitted from the control unit 160, the JPEG processor 221 collects still-images from images collected by the image sensor 210 and transmits them to the control unit 160.

The raw data processor 223 is an element that supports a video processing of the image data processing apparatus 220. The raw data processor 223 may digitalize optical information, which is collected in the form of analog signals by the image sensor 210, according to specific color format such as YUV or RGB. The raw data processor 223 may separate such data collected according to a specific format into frame units and transmit them to the control unit 160.

The metadata processor 225 is an element that records metadata for images being transmitted to the control unit 160 by the JPEG processor 221 or the raw data processor 223. More particularly, the metadata processor 225 receives at least one of a time stamp and a frame counter from the identification information processor 227 and allocates either or both of the time stamp and the frame counter to each image frame collected by the raw data processor 223. For this, the metadata processor 225 writes at least one of a time stamp and a frame counter, corresponding to identification information, in a format of metadata or embedded data and transmits metadata with identification information to the control unit 160. Here, identification information may be information used for identifying a sequential arrangement of image frames sequentially taken for storing video data, for example, at least one of the aforesaid time stamp and frame counter.

The identification information processor 227 is an element that allocates identification information to frames collected by the raw data processor 223 in a process of collecting video data. More particularly, the identification processor 227 may allocate at least one of a time stamp and a frame counter to each frame through the metadata processor 225. For allocation of a time stamp, the identification processor 227 may use a clock generator equipped in the image data processing apparatus 220. For example, when a signal for requesting a video recording is received, the identification processor 227 sends time information, as time stamp information, created in the clock generator to the metadata processor 225. The metadata processor 225 may write the received time stamp in an image frame collected by the raw data processor 223. Therefore, each frame of video data can be outputted from the image data processing apparatus 220, while having time stamp information.

Meanwhile, the identification information processor 227 may include a counter and allocate a counter to each initially collected image frame when the raw data processor 223 collects image frames in response to a signal for requesting a video recording. This counter information is delivered to the metadata processor 225, which may write a counter value in each image frame and transmit each image frame to the control unit 160. Therefore, respective frames of video data can be outputted from the image data processing apparatus 220, while having continuous counter values.

As discussed hereinbefore, the image data processing apparatus 220 may add at least one of a time stamp and a counter to frames collected by a video recording and output such frames.

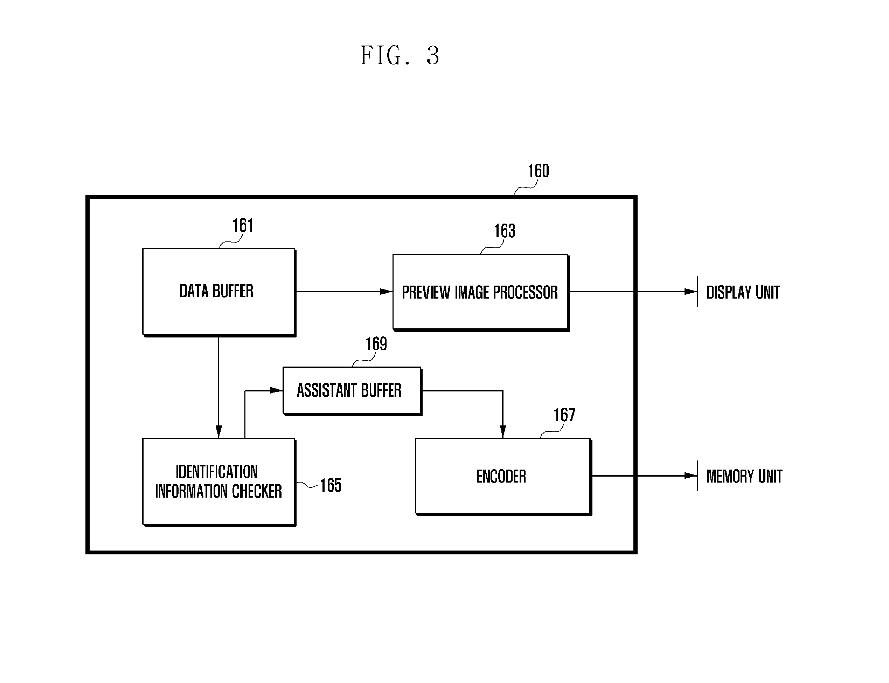

Returning to FIG. 1, the control unit 160 may receive data outputted from the image data processing apparatus 220, output the received data as preview images, and also perform a processing for storing video data. In this process, the control unit 160 may check for errors in video data and include elements for correcting such errors as shown in FIG. 3.

FIG. 3 is a block diagram illustrating a configuration of a control unit, such as the control unit shown in FIG. 1, in accordance with an embodiment of the present disclosure.

Referring to FIG. 3, the control unit 160 may include a data buffer 161, a preview image processor 163, an identification information checker 165, and an encoder 167. Additionally, for arrangement of image frames, the control unit 160 may further include an assistant buffer 169.

The data buffer 161 is an element that temporarily stores data provided from the camera module 200. More particularly, if the image data processing apparatus 220 continuously provides image frames during a video recording, the data buffer 161 stores video data by image frame units. Also, the data buffer 161 may store and output image frames in the First-In First-Out (FIFO) form. Image frames outputted from the data buffer 161 may be transmitted to the preview image processor 163 and the identification information checker 165, respectively.

The preview image processor 163 is an element that processes information stored in the data buffer 161 to be adapted for preview images and outputs them to the display unit 140. The preview image processor 163 may resize image frames stored in the data buffer 161 to have a suitable size for the display unit 140 and output the resized image frames to the display unit 140. Meanwhile, instead of receiving data from the data buffer 161, the preview image processor 163 may directly receive image frames from the image data processing apparatus 220 in an alternative embodiment. For example, image frames may be transferred to the preview image processor 163 without any buffer storing. When resizing the received image frames, the preview image processor 163 may discard a part of the image frame exceeding the size of the display unit 140.

The identification information checker 165 is an element that finds metadata of image frames outputted from the data buffer 161, determines whether the metadata conforms to certain rules, and thereby determines whether the image frames to be transmitted to the encoder 167 are changed in order or partially removed. For example, the identification information checker 165 may control image frames provided from the image data processing apparatus 220 to be transferred in a normal order to the encoder 167. Sometimes, due to an interrupt caused when the device 100 performs various scheduled tasks, an error may occur in storing or processing image frames received from the camera module 200. Unfortunately, this may invite a change in order of or a loss of image frames while the image data processing apparatus 220 transmits images to the device 100 having the camera module 200. To obviate such errors in processing of image frames, the identification information checker 165 supports an error correction by checking identification information of image frames.

For example, the identification information checker 165 may evaluate time stamp information of a current image frame outputted from the data buffer 161 and further evaluate whether the time stamp information is subsequent to time stamp information previously transmitted to the encoder 167. If time stamp information of a current image frame is not subsequent to that of a previous image frame, the identification information checker 165 may regard it as an error and determine whether there is any image frame having time stamp information subsequent to that of a previous frame among image frames stored in the data buffer 161. If such an image frame exists, the identification information checker 165 may receive the image frame from the data buffer 161 and transmit it to the encoder 167.

The identification information checker 165 may perform the above-discussed function by alternatively using counter information. For example, the identification information checker 165 finds counter information of a current image frame to be transferred to the encoder 167, and determines whether the counter information is next to that of an image frame previously transferred to the encoder 167. If counter information of a current image frame is not next to that of a previous image frame, the identification information checker 165 may check other image frames stored in the data buffer 161. If there is a suitable image frame having relevant counter information among the other image frames, the identification information checker 165 may obtain the image frame and transfer it to the encoder 167. For example, the identification information checker 165 may regulate the arrangement order of image frames.

Alternatively, the identification information checker 165 may use both time stamp information and counter information. The time stamp information may be varied according to setting conditions for taking images in the camera module 200. For example, the camera module 200 may increase or decrease the number of image frames collected per second, depending on the surrounding environment. For example, the camera module 200 may collect thirty image frames per second under a dark environment, and may collect sixty image frames per second under a bright environment. As a result, the interval between time stamps allocated to respective frames may be varied according to the surrounding environment. Therefore, the image data processing apparatus 220 may transfer information regarding variable frames to the control unit 160, so that the identification information checker 165 may apply it. However, the identification information checker 165 may use counter information as assisting time stamp information. Alternatively, the identification information checker 165 may perform error determination and correction for image frames using counter information only.

The encoder 167 performs an encoding process for image frames transferred by the identification information checker 165, and transmits the encoded data to the memory unit 150. Therefore, data transferred by the encoder 167 may be stored as the video data 153 in the memory unit 150.

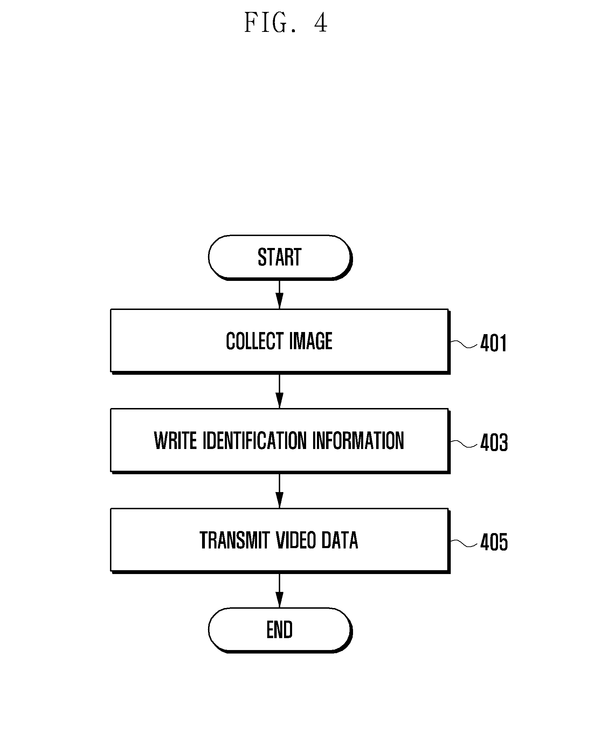

FIG. 4 is a flow diagram illustrating a method for operating an image data processing apparatus in accordance with an embodiment of the present disclosure.

Referring to FIG. 4, the method begins with the collecting of images at operation 401 when a signal for activating the camera module 200 is received. For this, the image data processing apparatus 220 may supply power to the image sensor 210, obtain image frames from optical information collected through the lens according to setting information, and transmit the image frames to the control unit 160. Such image frames transmitted to the control unit 160 may be suitably resized for the display unit 140 without additional processing.

Meanwhile, when an input event for recording a video is received, the image data processing apparatus 220 may store optical information formed in the image sensor 210 as image frames and, at operation 403, write identification information corresponding to each image frame in metadata. As discussed above, the identification information is to identify the order of respective image frames and may include at least one of time stamp information at a time point of collecting each image frame and counter information of each image frame. The time stamp information may be created using a clock generator provided for the operation of the image data processing apparatus 220.

At operation 405, the image data processing apparatus 220 transmits metadata with identification information to the control unit 160 together with a corresponding image frame.

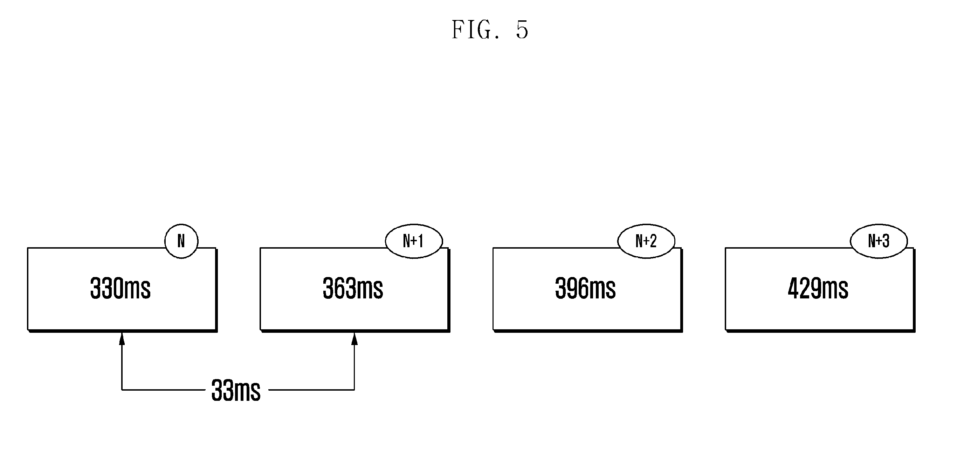

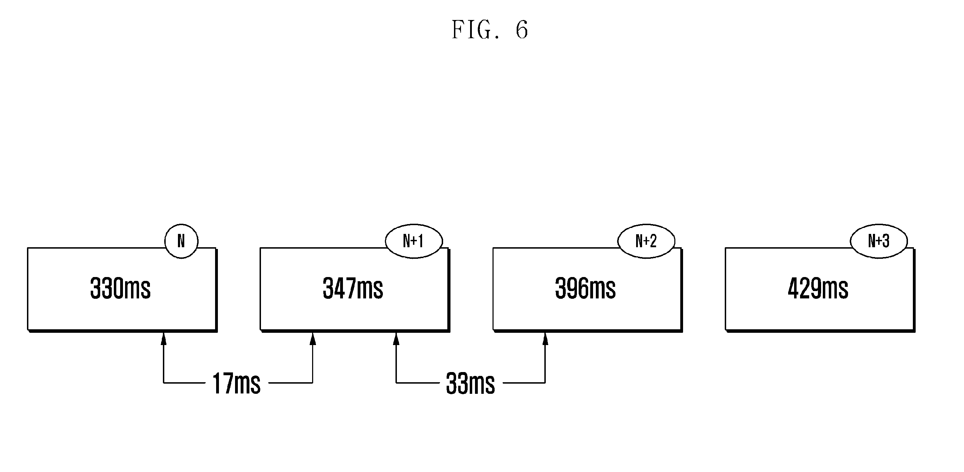

Such image frames in connection with writing of identification information in the image data processing apparatus 220 will be described in more detail hereinafter with reference to FIGS. 5 and 6.

FIG. 5 shows an example of allocating a time stamp to an image frame taken by a fixed frame type in accordance with an embodiment of the present disclosure.

Referring to FIG. 5, the image data processing apparatus 220 may affix a time stamp to a video recorded as a fixed frame at regular intervals using an internal timer based on a clock generator in the camera module 200, and transmit the video to the control unit 160 together with a frame counter. As illustrated, an image frame having the N-th frame counter and the 330ms time stamp is transmitted, and after 33ms, the next image frame having the (N+1)-th frame counter and the 363ms time stamp is transmitted. Thereafter, at the same interval of 33ms, the image data processing apparatus 220 affixes the 396ms time stamp to the next image frame having the (N+2)-th frame counter. Receiving this video of a fixed frame type, the control unit 160 may determine if the frames conform to the rule by using a time difference between time stamps. The control unit 160 may perform a suitable processing such as rearrangement in order to conform the frames to the rules. If any drop is found due to a missing time stamp, the control unit 160 may process the dropped frame by copying a previous frame. For example, when there is no image frame subsequent to a previous image frame in the data buffer, the control unit 160 may copy a previously processed image frame or copy a current image frame being outputted from the data buffer so as to provide the dropped image frame.

FIG. 6 shows an example of allocating a time stamp to an image frame taken by a variable frame type in accordance with an embodiment of the present disclosure.

Referring to FIG. 6, in a video of a variable frame type, images may start to be taken with thirty frames while taken with sixty frames. In this case, an interval between adjacent frames increases from 17ms to 33ms. Namely, 17ms between the N-th frame and the (N+1)-th frame corresponds to a time interval between frames taken on the basis of sixty frames. Similarly, 33ms between the (N+1)-th frame and the (N+2)-th frame corresponds to a time interval between frames taken on the basis of thirty frames. Here, counter information allocated by the image data processing apparatus 220 may be sequentially allocated to each frame regardless of variations in intervals between frames. As to a video of a variable frame type, the control unit 160 may perform an encoding process according to the time of a time stamp and the order of a frame counter. Meanwhile, if the reversion of order of image frames occurs, the control unit 160 may perform an error detection and rearrangement by using a frame counter. Also, the control unit 160 may perform an error detection and rearrangement through a time comparison between time stamps.

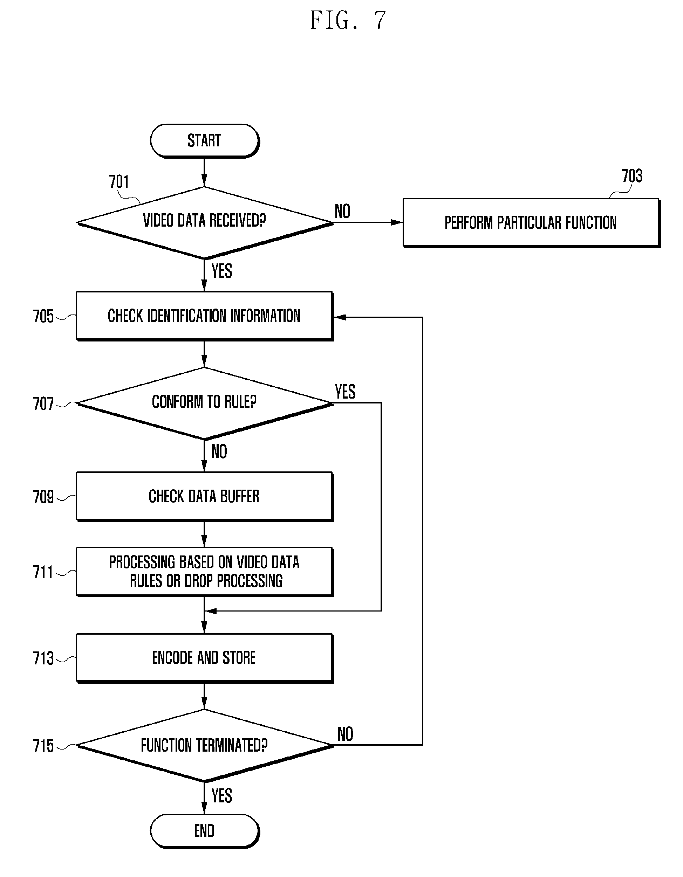

FIG. 7 shows a flow diagram illustrating a method for operating a control unit in accordance with an embodiment of the present disclosure.

Referring to FIG. 7, at operation 701, the control unit 160 determines whether video data is received. If no video data is received, the control unit 160 may perform a particular function in response to schedule information or at a user's request at operation 703. For example, the control unit 160 may perform any function associated with the camera module 200 such as a still-image taking function and a preview image providing function and may also perform any function based on the communication unit 110 such as a data transmission function, a data reception function, a call function, and the like.

If any video data is received at operation 701, the control unit 160 may evaluate identification information at operation 705. For example, the control unit 160 may identify a metadata region in information provided by the image data processing apparatus 220 of the camera module 200, and extract identification information from the region. Thereafter, the control unit 160 determines whether the identification information conforms to one or more rules at operation 707. For example, the control unit 160 may determine whether time stamp information of a current image frame is subsequent to that of a previous image frame transferred to the encoder 167. Normally, depending on the number of frames per second in a video recording, image frames have time stamps at sequential and regular time intervals. In such a case, the control unit 160 determines the continuity of time stamps having such regular time intervals. Alternatively, the control unit 160 may determine whether counter information of a current image frame is subsequent to that of a previous image frame transferred to the encoder 167. Also, the control unit 160 may determine both time stamp information and counter information.

If the identification information of a current image frame fails to conform to the one or more rules, the control unit 160 checks the data buffer 161 that buffers image frames transmitted from the image data processing apparatus 220 at operation 709. At operation 711, the control unit 160 may perform either a processing based on video data rules or a drop processing, depending on image frames stored in the data buffer 161. If any image frame that conforms to the one or more rules is stored in the data buffer 161, for example, if any image frame having identification information subsequent to that of a previously processed image frame is stored, the control unit 160 may extract the stored image frame and perform an image processing. For example, the control unit 160 may arrange the extracted image frame on the basis of a time stamp or counter information and transmit it to the encoder 167.

Meanwhile, if no image frame that conforms to the one or more rules is stored in the data buffer 161, the control unit 160 may drop a current image frame requiring processing. The control unit 160 may detect the next image frame subsequent to the dropped image frame and perform an image processing. At operation 713, the control unit 160 may encode the detected image frame in the encoder 167 and store it in the memory unit 150.

At operation 715, the control unit 160 may determine whether any event for terminating an error correction function is received. For example, if an input event for inactivating an error correction function occurs or if the operation of the camera module 200 is stopped, the control unit 160 may perform a specific task associated with a function termination. Meanwhile, if there is no event for a function termination, the control unit 160 may return to operation 705 discussed above.

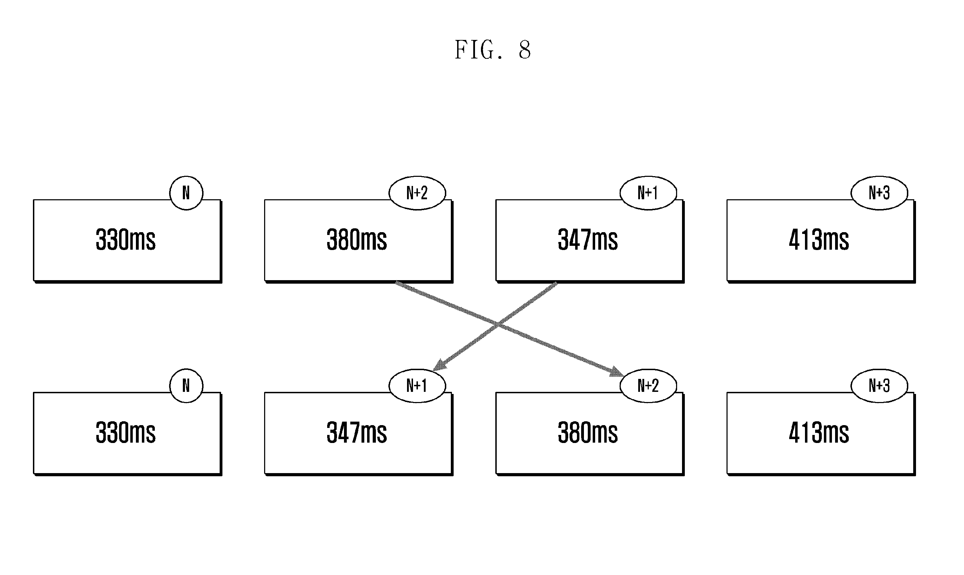

FIG. 8 shows an example of image frame rearrangement based on identification information in accordance with an embodiment of the present disclosure.

Referring to FIG. 8, if any image frame having the (N+2)-th frame counter and the 380ms time stamp is transmitted to the encoder 167 after the N-th image frame having 330ms time stamp is transmitted, either the identification information checker 165 or the encoder 167 having an identification information function may search for an image frame having the (N+1)-th frame counter. At this time, the identification information checker 165 may evaluate an image frame having the (N+1)-th frame counter stored in the data buffer 161, rearrange the (N+1)-th image frame at the front of the (N+2)-th image frame, and transmit it to the encoder 167. Here, the (N+2)-th image frame may be temporarily stored in the assistant buffer 169. After the (N+1)-th image frame is transferred to the encoder 167, the (N+2)-th image frame stored in the assistant buffer 169 may be called and transferred to the encoder 167.

Meanwhile, if there is no (N+1)-th image frame due to loss, the device 100 may create the (N+1)-th image frame by copying either the N-th image frame or the (N+2)-th image frame.

As discussed hereinbefore, the image data processing method of this disclosure may address a problem of a failure in data synchronization between the control unit 160 and the camera module 200 due to any interrupt that occurs when the camera module 200 transmits data to the control unit 160. For example, this disclosure may stably obviate unfavorable situations that any frame delay is caused by a time delay at the control unit 160 due to the above-discussed synchronization errors, especially that any frame delay is caused by a prediction uncertainty for a frame order and time interval in a video encoding process to a variable frame.

Although the above discussion is focused on a System-On-Chip (SOC) type in which the image data processing apparatus 220 is embedded in the camera module 200, this is exemplary only and not to be considered as a limitation of the present disclosure. For example, an image data processing technique of this disclosure may allow for the removal of encoding errors regardless of the location of the image data processing apparatus 220. The image data processing apparatus 220 may not only be embedded in the camera module 200, but also embedded in the control unit 160 (i.e., internal image signal processor type). Alternatively, the image data processing apparatus 220 may be disposed separately from both the camera module 200 and the control unit 160. Therefore, a signal processing for videos collected by the camera module 200 may be performed by the image data processing apparatus 220 embedded in the form of SOC in the camera module 200, disposed externally of the camera module 200, or embedded in the control unit 160.

Additionally, this disclosure may be applied to at least one of a fixed frame type and a variable frame type in a video recording, thus allowing identification information writing and decision for preventing encoding errors and further allowing related error detection and correction.

Although the above discussion is focused on using a clock of a clock generator provided in the image data processing apparatus 220 to define a time stamp, this is exemplary only and not to be considered as a limitation of the present disclosure. Alternatively, a time stamp may be formed using a clock generator disposed in the image sensor 210, a clock used for the operation of the image sensor 210, and the like. For example, for realizing a time stamp, this disclosure may selectively use a specific clock among various clocks of the device 100 except for a clock for the operation of the encoder 167 of the control unit 160.

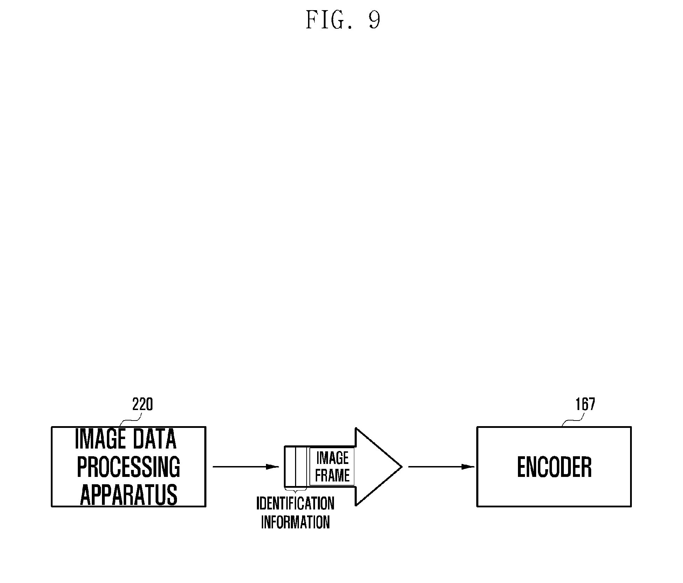

FIG. 9 shows an example of writing and transmitting identification information in accordance with an embodiment of the present disclosure.

Referring to FIG. 9, the image data processing apparatus 220 may create metadata or embedded data by combining an image frame created in the raw data processor 223 with identification information created in the metadata processor 225, and transmit it to the encoder 167 of the control unit 160. Although in the above-discussed embodiments the identification information checker 165 is separately provided to evaluate metadata of image frames and to extract identification information, the identification information checker 165 may be realized in the form of any identification information checking module and designed to be contained in the encoder 167. Here, the identification information checking module may be constructed as a program module. In this case, when information outputted from the data buffer 161 is transferred to the encoder 167, the encoder 167 may evaluate relevant identification information and perform error detection and correction. For example, using at least one of a time stamp and a frame counter, this disclosure may detect a frame delay, a frame drop, a frame order reversion, etc. and process them for correction.

According to a digital convergence tendency today, the above-discussed electronic device 100 may essentially or selectively further include any other elements such as a short-range communication module, a wired or wireless communication interface, an Internet communication module, a digital broadcast receiving module, and the like. Meanwhile, as will be understood by those skilled in the art, some of the above-mentioned elements in the device 100 may be omitted or replaced with another.

Additionally, the electronic device 100 according to embodiments of this disclosure may be applied to various types of mobile communication terminals such as a cellular phone, a smart phone, a tablet Personal Computer (PC), a handheld PC, a Portable Multimedia Player (PMP), a Personal Digital Assistant (PDA), a notebook, a portable game console, and the like.

The above-discussed method for processing image data in embodiments of this disclosure can be implemented as program commands that can be written to a computer-readable recording medium and can thus be read by various computer-aided means. Such a computer-readable recording medium can include program commands, a data file, a data structure, etc. alone or in combination. Program commands written on the computer-readable recording medium can be designed and configured specially for the present disclosure or known to those skilled in the art of computer software. Such a computer-readable recording medium can be any type of recording device in which data can be stored in a computer-readable manner. Examples of a computer-readable recording medium include a magnetic medium such as a hard disk, a floppy disk, and a magnetic tape, an optical medium such as a Compact Disc (CD)-Read Only Memory (ROM) or a Digital Versatile Disc (DVD), a magneto-optical medium such as a floptical disk, a hardware device configured specially to store and execute program commands such as a ROM, a Random Access Memory (RAM), and a flash memory. Examples of a program command include a high-level language code that can be executed in a computer by means of an interpreter as well as a machine language code such as created by a compiler. The hardware device can be configured to operate as one or more software modules to perform operations of the present disclosure, and vice versa.

While this disclosure has been particularly shown and described with reference to an embodiment thereof, it will be understood by those skilled in the art that various changes in form and details may be made therein without departing from the spirit and scope of the disclosure as defined by the appended claims.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An image data processing apparatus, the apparatus comprising:
a raw data processor configured to convert a signal collected by an image sensor into a digital signal;
an identification information processor configured to allocate identification information to each video frame obtained by the raw data processor; and
a metadata processor configured to write the identification information in metadata of the video frame.

2. The apparatus of claim 1, wherein the identification information processor is further configured to allocate at least one of a time stamp of the video frame and a frame counter for identifying the order of each image frame in the video frame.

3. The apparatus of claim 2, wherein the identification information processor is further configured to allocate time stamps with equal time intervals to the video frames in case of a video recording of a fixed frame type, and to allocate time stamps with different time intervals to the video frames in case of a video recording of a variable frame type.

4. The apparatus of claim 2, wherein the identification information processor is further configured to allocate the time stamp on the basis of a clock for operation of the image sensor or a clock for operation of the apparatus.

5. An electronic device supporting image data processing, the device comprising:
an image data processing apparatus configured to allocate identification information to an image frame of each video frame obtained, and to write the identification information in metadata of the video frame; and
a control unit configured to receive the video frame and the metadata from the image data processing apparatus, and to perform an encoding of the video frame by using the identification information allocated to each image frame.

6. The device of claim 5, wherein the control unit includes:
a data buffer configured to store image frames provided by the image data processing apparatus;
an identification information checker configured to determine identification information of the image frame outputted from the data buffer, and to determine a change in order of the image frames or a drop of the image frame; and
an encoder configured to encode the image frame.

7. The device of claim 6, wherein the identification information includes at least one of:
a time stamp of the image frame; and
a frame counter indicating an order of the image frame.

8. The device of claim 7, wherein the identification information checker is further configured to detect an order reversion of the image frames by checking the frame counter of a previously processed image frame and the frame counter of a current image frame being outputted from the data buffer, and if there is an order reversion of the image frames, to perform an order arrangement for the image frames.

9. The device of claim 8, wherein the control unit further includes an assistant buffer configured to temporarily store the current image frame, and wherein the identification information checker is further configured to determine whether the data buffer has a specific image frame having a frame counter subsequent to that of a previously processed image frame, perform, if the data buffer has the specific image frame, the order arrangement, and provide, if the data buffer has no the specific image frame, a dropped image frame by copying either the previously processed image frame or the current image frame.

10. The device of claim 5, wherein the image data processing apparatus is further configured to write the identification information allocated to the image frames in the metadata of the image frames.

11. An image data processing method, the method comprising:
obtaining an image frame in response to a request for a video recording;
allocating identification information to the obtained image frame; and
writing the identification information in metadata of the image frame.

12. The method of claim 11, further comprising:
receiving the image frames and the metadata with the identification information;
determining an error in order of the image frames on the basis of the identification information contained in the metadata; and
arranging the order of the image frames when the error in order of the image frames occurs.

13. The method of claim 12, wherein the arranging is performed using a frame counter contained in the identification information.

14. The method of claim 12, wherein the arranging includes:
temporarily storing a current image frame in an assistant buffer;
detecting a specific image frame subsequent to a previously processed image frame; and
arranging the specific image frame and the current image frame.

15. The method of claim 12, wherein the arranging includes, if a specific image frame is dropped among sequential image frames based on the identification information, copying a previous image frame or a next image frame of the dropped image frame and arranging the copied image frame instead of the dropped image frame.
